# DEMANDE DE BREVET EUROPEEN

(11) **EP 2 653 286 A2**
(43) Date de publication de la demande: **23.10.2013**
(21) Numéro de dépôt: 13290050.7
(22) Date de dépôt: 13.03.2013
(51) Int. Cl.: B29C 45/56, B29C 45/40

(54) **Moule par injection-compression et son utilisation**

(30) Priorité: 18.04.2012 FR 1201132
(71) Demandeur: Rouxel S.A., 78730 Saint-Arnoult-enYvelines (FR)
(72) Inventeur: Le Roux, Dominique, 45300 Sermaises (FR); Dubois, Thierry, 91410 Dourdan (FR)
(74) Mandataire: Flavenot, Bernard

(57) **Abrégé**

La présente invention concerne les moules pour réaliser, par injection-compression, une pièce Pmo.

Le moule selon l'invention comporte essentiellement un plateau fixe 10 dans lequel est définie une partie 11 de l'empreinte globale de la pièce Pmo, un plateau mobile 20 dans lequel est définie l'autre partie 21 de l'empreinte globale, ces deux parties 11, 21 étant aptes à définir l'empreinte globale en creux, et des moyens d'injection 30 de la matière de moulage, le plateau mobile 20 étant en outre constitué de deux plateaux auxiliaires 211, 212 montés en association et coulissant l'un par rapport à l'autre de façon sensiblement étanche selon la direction Dir, et de moyens 220 pour déplacer ces deux plateaux auxiliaires 211, 212 indépendamment l'un de l'autre suivant la direction Dir de façon que dans un premier emplacement ces deux plateaux auxiliaires 211, 212 coopèrent entre eux et avec le plateau fixe 10 pour former l'empreinte globale, et que dans un second emplacement Emp2, le plateau 212 soit plus éloigné du plateau 10 que l'autre 211.

## Description

La présente invention concerne les moules pour réaliser par injection-compression, au moins une pièce moulée, et avantageusement une pluralité de telles pièces, avec une matière de moulage en phase pâteuse à chaud et solide à froid.

Un tel moule par injection-compression, comme par exemple ceux qui sont décrits dans les JP 8 323816, JP 2003 159735 et US 2007/063386, comporte un plateau fixe dans lequel est définie une première partie de l'empreinte globale de la pièce à mouler, un plateau mobile dans lequel est définie une seconde partie de cette empreinte globale, ces première et seconde parties d'empreinte globale étant aptes à définir, quand les deux plateaux fixe et mobile coopèrent entre eux dans une première position déterminée, l'empreinte globale, le plateau mobile étant en outre déplaçable selon une direction déterminée parallèle à la droite donnée, entre cette première position et une seconde position de façon que, dans cette seconde position, ce plateau mobile soit éloigné du plateau fixe pour permettre le démoulage de la pièce après son moulage et sa solidification, et des moyens d'injection du matière de moulage débouchant en surface du plateau fixe au niveau de la première partie de l'empreinte globale.

Un tel moule par injection-compression fonctionne comme décrit ci-dessous. Les deux plateaux sont éloignés l'un de l'autre, par exemple en coulissant l'un dans l'autre, pour définir entre eux un espace initial plus grand que celui de l'empreinte, et une quantité déterminée de matière de moulage en phase pâteuse correspondant à la quantité nécessaire pour réaliser la pièce à mouler est injectée dans cet espace. Dès que l'injection de cette quantité de matière est terminée, les deux plateaux sont rapprochés l'un de l'autre pour former l'empreinte globale de la pièce à mouler. Sous l'effet de la pression exercée sur elle par les deux plateaux, la matière se répartit en remplissant toute l'empreinte pour prendre la forme de la pièce qui doit être moulée.

Dès que la matière est solidifiée, les deux plateaux sont éloignés l'un de l'autre pour qu'il soit possible de récupérer la pièce moulée solidifiée, par exemple de façon connue au moyen d'un doigt pousseur ou analogue.

Ces moules donnent de bons résultats mais peuvent présenter des inconvénients qui sont essentiellement de deux ordres.

Le premier inconvénient concerne le démoulage des pièces moulées et solidifiées, le second concerne la réalisation simultanée de plusieurs pièces, en grande quantité, au moyen d'un seul moule.

Aussi, la présente invention a-t-elle pour but de réaliser un moule par injection-compression d'une pièce définie dans une empreinte globale ayant une aire hors-tout prise dans un plan perpendiculaire à une droite donnée d'une valeur déterminée et une épaisseur hors-tout prise selon cette droite égale une autre valeur déterminée, comme un couvercle ou analogue, qui tente de pallier les inconvénients des moules de l'art antérieur et de résoudre au mieux les problèmes évoqués ci-dessus, et surtout qui permette la réalisation simultanée de plusieurs pièces, en grande quantité, au moyen d'un seul moule de façon que les pièces ainsi obtenues soient relativement homogènes les unes par rapport aux autres.

Plus précisément, la présente invention a pour objet un moule pour réaliser, par injection-compression, au moins une pièce moulée, dont les caractéristiques sont définies dans les revendications années.

D'autres caractéristiques et avantages de la présente invention apparaîtront au cours de la description suivante donnée en regard des dessins annexés à titre illustratif mais nullement limitatif, dans lesquels :

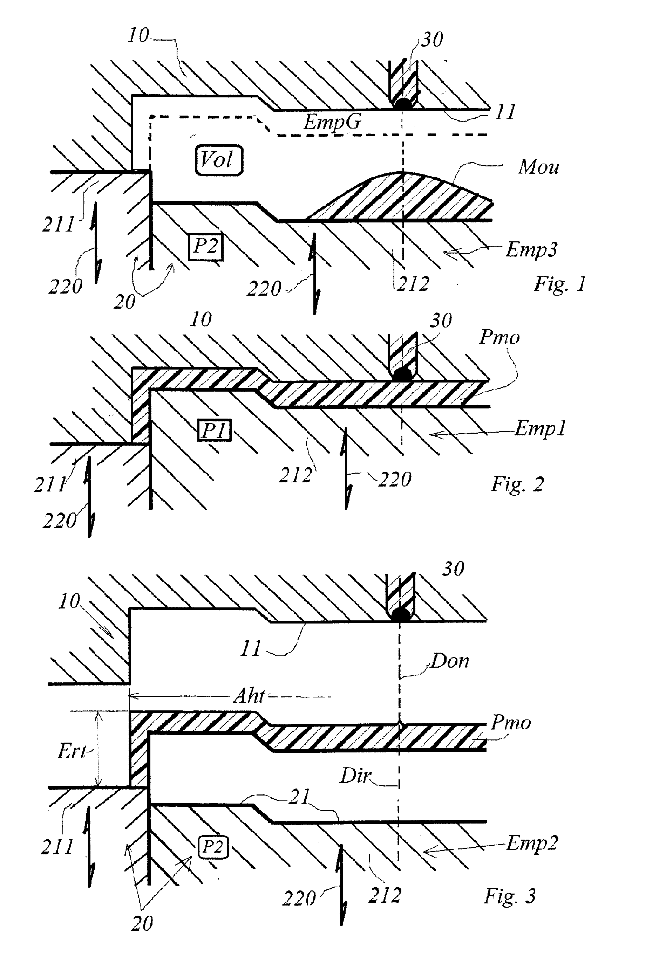

Les figures 1 à 3 représentent, de façon très schématique et en demi-coupe, un premier mode de réalisation du moule par injection-compression selon l'invention, respectivement dans trois configurations qui correspondent à trois phases du processus d'utilisation du moule selon ce premier mode de réalisation, et

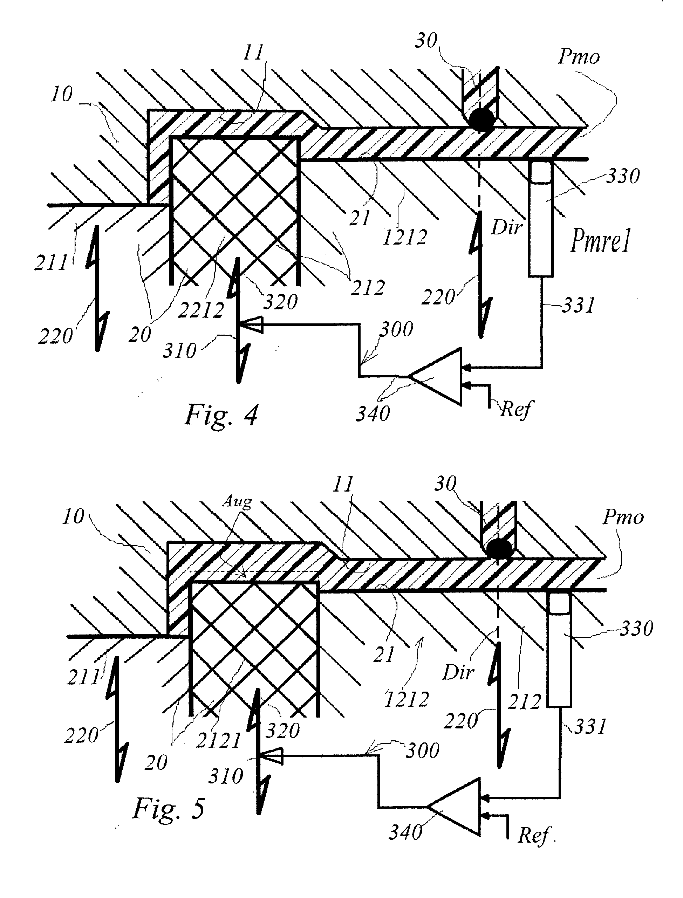

Les figures 4 et 5 représentent, de façon très schématique et en demi-coupe, un second mode de réalisation du moule par injection-compression selon l'invention, constituant un perfectionnement du mode de réalisation selon les figures 1 à 3, respectivement dans deux configurations qui correspondent à deux phases du processus d'utilisation du moule selon ce second mode de réalisation.

Il est bien précisé que, dans la présente description, si l'adverbe "sensiblement" est associé à un qualificatif d'un moyen donné, ce qualificatif doit être compris au sens strict ou approché.

En référence aux figures 1 à 3, la présente invention est relative à un moule pour réaliser, par le procédé d'injection-compression connu en lui-même, au moins une pièce moulée Pmo avec une matière de moulage Mou qui est en phase pâteuse à chaud et en phase solide à froid, la pièce moulée étant définie dans une enveloppe dite "empreinte globale" EmpG, qui est donc de forme creuse, destinée à être remplie de la matière de moulage Mou. La pièce à moulée présente en outre une aire hors-tout prise dans un plan perpendiculaire à une droite donnée Don égale à Aht et une épaisseur hors-tout prise selon la droite donnée égale à Ert, figure 3.

Le moule comporte un plateau fixe 10 dans lequel est définie une première partie 11 de l'empreinte globale EmpG et un plateau mobile 20 dans lequel est définie une seconde partie 21 de cette empreinte globale EmpG, ces première et seconde parties 11, 21 d'empreinte globale EmpG étant aptes à définir ensemble l'empreinte globale EmpG quand les plateaux fixe 11 et mobile 20 coopèrent entre eux dans une première position déterminée P1, figure 2.

Le plateau mobile 20 est agencé pour être apte à se déplacer selon une direction déterminée Dir parallèle à la droite donnée Don, entre la première position P1 et une seconde position P2, figures 1 et 2, de façon que, dans cette seconde position, ce plateau mobile 20 soit éloigné du plateau fixe 10.

Le moule comporte en outre des moyens d'injection 30 de la matière de moulage Mou qui débouchent sur la surface de la première partie 11 de l'empreinte globale EmpG. Ces moyens d'injection connus en eux-mêmes sont constitués, par exemple très schématiquement, d'une buse d'injection associée à un ensemble de moyens, comme une vis sans fin ou analogue, qui permettent de faire déboucher, à la demande et en quantité déterminée, la matière de moulage Mou quand elle est en phase pâteuse, et ce par au moins un orifice situé au niveau de cette première partie d'empreinte 11, comme illustré sur toutes les figures annexées.

Selon une caractéristique de l'invention, le plateau mobile 20 est constitué d'au moins un premier plateau auxiliaire 211 et un second plateau auxiliaire 212 montés en association et coulissant l'un par rapport à l'autre de façon sensiblement étanche selon la direction Dir définie ci-avant, et de moyens 220 pour déplacer ces deux plateaux auxiliaires 211, 212 l'un par rapport à l'autre suivant cette direction Dir de façon que : (i) dans un premier emplacement Emp1, figure 2, après un premier déplacement dans un premier sens sur la direction Dir qui tend à les approcher du plateau fixe, ces deux plateaux auxiliaires 211, 212 coopèrent entre eux et avec le plateau fixe 10 pour former l'empreinte globale EmpG ; (ii) dans un second emplacement Emp2, figures 1 et 3, après un second déplacement dans le second sens opposé au premier sens sur la même direction Dir, l'un 212 des premier et second plateaux auxiliaires 211, 212 soit à une distance du plateau fixe plus grande que l'autre 211 pour réaliser le démoulage de la pièce moulée Pmo.

Selon un mode de réalisation, comme celui illustré sur les figures 1 à 3, le premier plateau auxiliaire 211 présente une forme annulaire entourant le second plateau auxiliaire 212 et, de façon avantageuse, ce second plateau auxiliaire 212 est agencé pour s'éloigner du plateau fixe 10 plus que le premier plateau auxiliaire 211.

Dans ce cas, la surface hors-tout du premier plateau auxiliaire 211 prise dans le plan perpendiculaire à la droite donnée Don est au moins égale à Aht sinon supérieure et que la surface hors-tout du second plateau auxiliaire 212 prise dans ce même plan perpendiculaire est inférieure à Aht, , comme illustré sur les figures 1 à 5.

De façon avantageuse, comme dans l'exemple illustré sur les figures 1 à 5, les moyens 220 pour déplacer les deux plateaux auxiliaires 211, 212 indépendamment l'un de l'autre suivant la direction Dir, sont agencés de façon que le premier plateau auxiliaire 211 soit apte à s'éloigner du plateau fixe 10 d'au moins une distance égale à Ert, figure 3.

Pour obtenir l'injection-compression comme il sera explicité ci-après, les moyens 220 pour déplacer les deux plateaux auxiliaires 211, 212 sont en outre agencés de façon que le premier plateau auxiliaire 211 coopère avec le plateau fixe 10 pour former avec lui une portion de la seconde partie 12 de l'empreinte globale EmpG, figure 1, avant que le second plateau auxiliaire 212 coopère avec ce même plateau fixe 10 en fin du premier déplacement pour former cette empreinte globale.

Le moule selon l'invention, tel que décrit ci-dessus, s'utilise comme décrit ci-dessous.

Les trois plateaux, à savoir le plateau fixe 10, le premier plateau auxiliaire 211 et le second plateau auxiliaire 212 sont tout d'abord positionnés comme illustré sur la figure 1, et comme décrit ci-après.

Le premier plateau auxiliaire 211 est positionné par rapport au plateau fixe 10 de façon qu'ils délimitent ensemble la portion de la seconde partie de l'empreinte globale EmpG, et le second plateau auxiliaire 212 est dans un emplacement d'attente Emp3 dans lequel il est éloigné du plateau fixe 10 en formant, avec ce plateau fixe et le premier plateau auxiliaire 211, un volume fermé Vol supérieur à celui de l'empreinte globale EmpG.

Puis une quantité de matière de moulage Mou en phase pâteuse Mou est injectée via les moyens 30 dans le volume fermé Vol, figure 1, le volume de cette quantité de matière de moulage injectée Mou étant déterminé pour être le plus possible égal au volume de l'empreinte globale EmpG.

Dès la fin de cette injection, le second plateau auxiliaire 212 est déplacé, figure 2, de façon qu'il forme, avec le plateau fixe 10 et le premier plateau auxiliaire 211, l'empreinte globale EmpG. Dans ce mouvement, il comprime la quantité de matière Mou injectée qui s'étale et remplit, sous l'action de la pression exercée, toute l'empreinte globale EmpG pour former la pièce Pmo.

Après refroidissement, c'est-à-dire quand la matière de moulage s'est solidifiée, les premier et second plateaux auxiliaires 211, 212 sont, dans un premier temps déplacés en les éloignant du plateau fixe 10 d'une distance au moins égale à Ert pour dissocier la pièce moulée Pmo solidifiée du plateau fixe 10, puis dans un second temps en éloignant uniquement le second plateau auxiliaire 212 du plateau fixe 10 pour dissocier la pièce moulée Pmo solidifiée du second plateau auxiliaire 212 par le jeu du déplacement relatif du second plateau auxiliaire 212 par rapport au premier plateau auxiliaire 211, figure 3.

Il est alors possible de récupérer la pièce moulée Pmo reposant sur le premier plateau auxiliaire 211, en la poussant par exemple avec un doigt pousseur ou analogue, pour qu'elle tombe dans un bac récupérateur ou analogue et soit ensuite exploitée comme il est prévu.

Le mode de réalisation décrit ci-dessus du moule selon l'invention permet de réaliser une pièce par moulage et d'obtenir son démoulage automatique.

En revanche, le problème de la réalisation simultanée d'un grand nombre de pièces au moyen d'un seul moule n'est pas particulièrement solutionné.

Eh effet, quand on veut réaliser simultanément une pluralité de pièces moulées au moyen d'un seul moule, ce moule est conçu pour comporter autant d'empreintes globales en creux EmpG que de pièces à réaliser simultanément.

Ainsi, pour réaliser simultanément une pluralité de pièces moulées Pmo, il faut tout d'abord procéder à l'injection de la quantité déterminée de matière en phase pâteuse dans chaque empreinte avant qu'elle soit sous sa forme globale Empg, c'est-à-dire avant que les deux parties de moule, respectivement fixe 10 et mobile 20, coopèrent pour former l'empreinte finale globale EmpG.

Dès que cette pluralité d'injections simultanées est terminée, la partie de moule mobile 20 est déplacée par rapport à la partie de moule fixe 10, pour former l'empreinte globale finale EmpG, de façon que toutes les pièces se forment par moulage en pression comme décrit ci-avant.

Cependant, avec cette façon de procéder, il est tout à fait concevable qu'il est presque impossible que les quantités de matière injectée aient toutes strictement le même volume, la même consistance, etc.. En conséquence, quand les deux parties de moule 10, 20 coopèrent pour former toutes les empreintes EmpG, il est possible que, dans certaines empreintes, il n'y ait pas assez de matière injectée, et que, dans d'autres, il y ait trop.

Ainsi, en finale, toutes les pièces moulées simultanément risquent de ne pas être homogènes.

Le mode de réalisation illustré sur les figures 4 et 5 constitue un perfectionnement au mode de réalisation du moule selon l'invention décrit ci-dessus en regard des figures 1 à 3.

En effet, le moule selon l'invention comporte, en plus des caractéristiques décrites ci-avant dans le mode de réalisation en accord avec les figures 1 à 3, celles qui sont décrites ci-après en regard des figures 4 et 5.

Selon ce second mode de réalisation, l'un 212 des deux plateaux auxiliaires 211, 212 est constitué d'un plateau auxiliaire principal 1212 et d'un plateau auxiliaire secondaire 2212 montés coulissants de façon sensiblement étanche l'un par rapport à l'autre, par exemple à la manière d'un piston dans un cylindre.

Le moule comporte alors en outre des moyens 300 pour déplacer en coulissement le plateau auxiliaire secondaire 2212 par rapport au plateau auxiliaire principal 1212 en fonction de la pression régnant dans l'empreinte globale EmpG lorsque la pièce Pmo est moulée en pression avec la matière de moulage Mou en phase pâteuse, c'est-à-dire quand le second plateau auxiliaire 212 est rapproché du plateau fixe 10 pour former, avec le premier plateau auxiliaire 211, l'empreinte globale Empg comme il a été décrit ci-avant en regard des figures 1 à 3.

Selon une réalisation préférentielle, comme schématiquement illustré de façon conventionnelle, ces moyens 300 pour déplacer le plateau auxiliaire secondaire 2212 par rapport au plateau auxiliaire principal 1212 en fonction de la pression régnant dans l'empreinte globale EmpG sont constitués par des moyens de vérin 310 à commande à double-sens selon la direction Dir, des moyens 320 pour relier ces moyens de vérin avec le plateau auxiliaire secondaire 2212 de façon à commander le coulissement, dans un sens ou dans l'autre, de ce plateau auxiliaire secondaire par rapport au plateau auxiliaire principal 1212, des moyens de capteur de pression 330 aptes à délivrer en sortie 331 un signal de commande représentatif de la pression régnant dans l'empreinte globale quand les deux plateaux auxiliaires 211, 212 coopèrent entre eux et avec le plateau fixe 10 quand ils sont dans leur premier emplacement Emp1, et des moyens 340 pour appliquer ce signal de commande représentatif de la pression régnant dans l'empreinte globale EmpG aux moyens de vérin 310, de façon que la pression dans l'empreinte globale EmpG soit égale à une valeur de référence Ref.

Ces derniers moyens 340 sont du domaine de l'homme du métier et peuvent comporter par exemple un amplificateur différentiel (AD) de comparaison à deux entrées dont l'une reçoit le signal délivré par les moyens de capteur de pression 330, et l'autre le signal de référence de valeur Ref délivré par tous moyens bien connus, la sortie de cet AD étant reliée à l'entrée de commande des moyens de vérin 310.

Il est tout d'abord précisé que l'emplacement du plateau auxiliaire secondaire 2212 par rapport au plateau auxiliaire principal 1212 est choisi à un endroit où la valeur de l'épaisseur de paroi de la pièce à mouler n'a pas besoin d'être d'une grande précision, par exemple le bord d'un couvercle ou analogue.

Pour illustrer le fonctionnement d'un tel moule selon l'invention, à titre d'exemple sur la figure 5, il a été représenté le cas où la quantité de matière injectée a été supérieure à la quantité souhaitée. Dans ce cas, le surplus de matière injectée avant le moulage de la pièce provoque une augmentation de la pression dans l'empreinte globale EmpG lors du moulage en compression de la pièce. Les moyens de capteur de pression 330 détectent cette augmentation de pression et émettent un signal qui est transmis, via le AD, aux moyens de commande du vérin pour faire diminuer la pression dans l'empreinte globale par le recul du plateau auxiliaire secondaire 2212 par rapport au plateau auxiliaire principal 1121. Ceci aura pour conséquence une augmentation de l'épaisseur de la partie de paroi de la pièce Pmo qui est en regard du plateau auxiliaire secondaire 2212, par rapport à celle qu'elle devrait avoir normalement. Cette augmentation d'épaisseur référencée Aug est délimitée par des traits interrompus sur la figure 5.

Le cas d'un manque de quantité de matière initiale injectée se serait traduit par une réduction d'épaisseur de la même partie de paroi que ci-dessus. Ce cas n'a pas été illustré, mais se déduira sans difficulté du cas précédent.

Le moule selon l'invention dans son second mode de réalisation décrit en regard des figures 4 et 5 peut ainsi comporter sans problème une pluralité d'empreintes globales et permet d'obtenir par moulage simultanément une pluralité de pièces Pmo qui seront toutes de structure homogène. Si certaines pièces présentent des formes extérieures non rigoureusement identiques, les différences sont en général négligeables et invisibles à l'oeil nu.

## Revendications

1. Moule pour réaliser, par injection-compression, au moins une pièce moulée (Pmo) avec une matière de moulage (Mou) en phase pâteuse à chaud et en phase solide à froid, ladite pièce moulée étant définie dans une empreinte globale (EmpG), ladite pièce moulée ayant une aire hors-tout prise dans un plan perpendiculaire à une droite donnée (Don) égale à Aht et une épaisseur hors-tout prise selon la droite donnée égale à Ert, ledit moule comportant :
• un plateau fixe (10) dans lequel est définie une première partie (11) de ladite empreinte globale (EmpG),
• un plateau mobile (20) dans lequel est définie une seconde partie (21) de ladite empreinte globale (EmpG), ces première et seconde parties (11, 21) d'empreinte globale (EmpG) étant aptes à définir l'empreinte globale (EmpG) quand les plateaux fixe (11) et mobile (20) coopèrent entre eux dans une première position déterminée (P1), le plateau mobile (20) étant apte à se déplacer selon une direction déterminée (Dir) parallèle à ladite droite donnée (Don), entre la première position (P1) et une seconde position (P2) de façon que, dans cette seconde position, ce plateau mobile (20) soit éloigné du plateau fixe (10), ledit plateau mobile (20) étant en outre constitué d'au moins un premier et un second plateaux auxiliaires (211, 212) montés en association et coulissant l'un par rapport à l'autre de façon sensiblement étanche selon ladite direction (Dir),
• des moyens (220) pour déplacer ces deux plateaux auxiliaires (211, 212) indépendamment l'un de l'autre suivant ladite direction (Dir) de façon que dans un premier emplacement (Emp1) après un premier déplacement dans un premier sens sur la direction (Dir) qui tend à les approcher du plateau fixe, ces deux plateaux auxiliaires (211, 212) coopèrent entre eux et avec le plateau fixe (10) pour former ladite empreinte globale (EmpG), et
• des moyens d'injection (30) de la matière de moulage (Mou) débouchant sur ladite première partie (11) de l'empreinte globale (EmpG), **caractérisé par le fait que** lesdits moyens (220) pour déplacer ces deux plateaux auxiliaires (211, 212) indépendamment l'un de l'autre sont en outre agencés de façon que, dans un second emplacement (Emp2) suite à un second déplacement dans le second sens opposé au premier sens sur la même direction (Dir), l'un (212) des premier et second plateaux auxiliaires (211, 212) soit à une distance du plateau fixe plus grande que l'autre (211) pour réaliser le démoulage de ladite pièce moulée (Pmo).

2. Moule selon la revendication 1, **caractérisé par le fait que** le premier plateau auxiliaire (211) présente une forme annulaire entourant le second plateau auxiliaire (212).

3. Moule selon la revendication 2, **caractérisé par le fait que** le second plateau auxiliaire (212) est agencé pour s'éloigner du plateau fixe (10) plus que le premier plateau auxiliaire (211).

4. Moule selon la revendication 3, **caractérisé par le fait que** les moyens (220) pour déplacer les deux plateaux auxiliaires (211, 212) indépendamment l'un de l'autre suivant la direction (Dir), sont agencés de façon que le premier plateau auxiliaire (211) soit pate à s'éloigner du plateau fixe (10) d'au moins une distance égale à Ert.

5. Moule selon l'une des revendications 2 à 4, **caractérisé par le fait que** les moyens (220) pour déplacer les deux plateaux auxiliaires (211, 212) sont agencés de façon que le premier plateau auxiliaire (211) coopère avec le plateau fixe (10) avant que le second plateau auxiliaire (212) coopère avec ce même plateau fixe en fin du premier déplacement pour former ladite empreinte globale (EmpG).

6. Moule selon l'une des revendications 1 à 5, **caractérisé par le fait que** l'un (212) des deux plateaux auxiliaires (211, 212) est constitué d'un plateau auxiliaire principal (1212) et d'un plateau auxiliaire secondaire (2212) montés coulissants l'un par rapport à l'autre et de façon sensiblement étanche, et que ledit moule comporte en outre des moyens (300) pour déplacer en coulissement ledit plateau auxiliaire secondaire (2212) par rapport au dit plateau auxiliaire principal (1212) en fonction de la pression régnant dans ladite empreinte globale (EmpG) lorsque ladite pièce (Pmo) est moulée avec ladite matière de moulage (Mou) en phase pâteuse.

7. Moule selon la revendication 6, **caractérisé par le fait que** les moyens (300) pour déplacer ledit plateau auxiliaire secondaire (2212) par rapport audit plateau auxiliaire principal (1212) en fonction de la pression régnant dans ladite empreinte globale (EmpG) sont constitués par :
• des moyens de vérin (310) à commande à double-sens selon ladite direction (Dir),
• des moyens (320) pour relier lesdits moyens de vérin avec ledit plateau auxiliaire secondaire (2212) de façon à commander le coulissement de ce plateau auxiliaire secondaire par rapport au plateau auxiliaire principal (1212),
• des moyens de capteur de pression (330) aptes à délivrer en sortie (331) un signal de commande représentatif de la pression régnant dans ladite empreinte globale quand les deux plateaux auxiliaires (211, 212) coopèrent entre eux et avec le plateau fixe (10) quand ils sont dans leur premier emplacement (Emp1), et
• des moyens (340) pour appliquer ledit signal de commande représentatif de la pression régnant dans ladite empreinte globale (EmpG) aux dits moyens de vérin (310), de façon que la pression dans l'empreinte globale (EmpG) soit égale à une valeur de référence (Ref).

8. Moule selon l'une des revendications précédentes quand elle dépend de la revendication 2, **caractérisé par le fait que** la surface hors-tout du premier plateau auxiliaire (211) prise dans le plan perpendiculaire à la droite donnée (Don) est au moins égale à Aht et que la surface hors-tout du second plateau auxiliaire (212) prise dans ledit plan perpendiculaire à la droite donnée (Don) est inférieure à Aht.

9. Utilisation du moule selon au moins l'une des revendications précédentes quand elle dépend de la revendication 3, **caractérisée par le fait qu'**elle consiste :
• à positionner le plateau fixe (10) et le premier plateau auxiliaire (211) de façon qu'ils délimitent ensemble une portion de la seconde partie de ladite empreinte globale (EmpG), le second plateau auxiliaire étant dans un emplacement d'attente (Emp3) dans lequel il est éloigné du plateau fixe (10) en formant, avec le plateau fixe (10) et le premier plateau auxiliaire (211), un volume fermé (Vol) supérieur à celui de ladite empreinte globale (EmpG),
• à injecter une quantité de matière de moulage en phase pâteuse (Mou) dans ledit volume fermé (Vol), le volume de ladite quantité de matière de moulage injectée étant sensiblement égal au volume de ladite empreinte globale (EmpG),
• à déplacer ledit second plateau auxiliaire (212) de façon qu'il forme, avec le plateau fixe (10) et le premier plateau auxiliaire (211), ladite empreinte globale (EmpG),
• à déplacer, quand ladite matière de moulage est solidifiée, les premier et second plateaux auxiliaires (211, 212), dans un premier temps en les éloignant du plateau fixe (10) d'une distance au moins égale à Ert pour dissocier la pièce moulée (Pmo) solidifiée du plateau fixe (10), puis dans un second temps en éloignant uniquement le second plateau auxiliaire (212) du plateau fixe (10) pour dissocier la pièce moulée (Pmo) solidifiée du second plateau auxiliaire (212) par le jeu du déplacement relatif du second plateau auxiliaire (212) par rapport au premier plateau auxiliaire (211), et
• à récupérer ladite pièce moulée (Pmo) sur le premier plateau auxiliaire (211).
